# EUROPÄISCHE PATENTSCHRIFT

(11) **EP 4 371 010 B1**
(45) Veröffentlichungstag und Bekanntmachung des Hinweises auf die Patenterteilung: **28.08.2024**
(21) Anmeldenummer: 23775977.4
(22) Anmeldetag: 18.09.2023
(51) Int. Cl.: G06F 12/02, G06F 9/00

(54) **VERFAHREN ZUM STATISCHEN ALLOZIEREN UND ZUWEISEN VON INFORMATIONEN ZU SPEICHERBEREICHEN, INFORMATIONSTECHNISCHES SYSTEM UND FAHRZEUG**
METHOD FOR STATICALLY ALLOCATING AND ASSIGNING INFORMATION TO MEMORY AREAS, INFORMATION TECHNOLOGY SYSTEM AND VEHICLE
PROCÉDÉ D'ATTRIBUTION STATIQUE ET D'ATTRIBUTION D'INFORMATIONS À DES ZONES DE STOCKAGE, SYSTÈME TECHNOLOGIE DE L'INFORMATION ET VÉHICULE

(30) Priorität: 05.10.2022 DE 102022003674
(43) Veröffentlichungstag der Anmeldung: 22.05.2024
(73) Patentinhaber: Mercedes-Benz Group AG, 70372 Stuttgart (DE)
(72) Erfinder: WILMER, Thorsten, 71063 Sindelfingen (DE)
(74) Vertreter: Novagraaf Group
(86) Internationale Anmeldenummer: PCT/EP2023/075628
(87) Internationale Veröffentlichungsnummer: WO 2024/074295

(56) Entgegenhaltungen:
- WO-A1-98/28689
- US-B2- 9 552 206

## Beschreibung

Die Erfindung betrifft ein Verfahren zum statischen Allozieren und Zuweisen von Informationen zu Speicherbereichen eines prozessorexternen Speichers eines informationstechnischen Systems nach der im Oberbegriff von Anspruch 1 näher definierten Art, ein informationstechnisches System zur Durchführung des Verfahrens sowie ein Fahrzeug mit einem solchen informationstechnischen System.

Informationstechnische Systeme wie PCs oder Mikrocontroller, beispielsweise in Form von eingebetteten Systemen, umfassen verschiedenste elektrische und elektronische Komponenten. Von besonderer Bedeutung sind dabei Prozessoren, welche zur Ausführung von Code dienen sowie Speicherelemente, die dazu dienen entsprechenden Code zu bevorraten und während der durch den Prozessor beim Abarbeiten des Codes anfallende Informationen zu speichern. Die Verfügbarkeit von freiem Speicher in informationstechnischen Systemen ist typischerweise limitiert. Während Massenspeicher wie Festplatten oder SSDs über vergleichsweise viel Speicherplatz verfügen und dabei vergleichsweise günstig sind, so ist jedoch ihre Zugriffszeit durch den Prozessor vergleichsweise langsam. Typischerweise gilt, je schneller der Zugriff auf ein Speicherelement durch den Prozessor ist, desto kleiner ist der verfügbare Speicherplatz und desto teurer ist das Speicherelement.

Zur Reduktion der Laufzeit von Programmen ist es wünschenswert einen möglichst hohen Anteil der Datenverarbeitung auf solche Speicherelemente zu verteilen, über die der Prozessor eine vergleichsweise kurze Zugriffszeit verfügt.

Der Teil eines Betriebssystems der die Speicherhierarchie verwaltet, wird als Speicherverwaltung bezeichnet. Die Speicherverwaltung soll im Zusammenhang mit PCs beispielsweise einen effizienten und komfortablen Zugriff auf den physischen Arbeitsspeicher ermöglichen. Während der Laufzeit eines Betriebssystems werden das Betriebssystem selbst sowie auf dem Betriebssystem ausgeführte Programme betreffende Informationen in den Arbeitsspeicher geschrieben, sodass der Prozessor des Computers darauf zugreifen kann. Dabei kann der Fall eintreten, dass nicht genügend Arbeitsspeicher vorhanden ist, um sämtliche Informationen aufzunehmen. Dies wird auch als "Spillover" bezeichnet. Abhilfe schafft die sogenannte dynamische Speicherverwaltung, bei der aktuell nicht benötigte Daten aus dem Arbeitsspeicher auf ein jeweiliges Massenspeichermedium wie die Festplatte oder die SSD geschrieben werden. Sollen diese Informationen weiterbearbeitet werden, so werden sie erneut in den Arbeitsspeicher geladen und dafür andere Informationen aus diesem entfernt.

Eine dynamische Speicherverwaltung ist unter Verwendung sogenannter Bitmaps sowie verketteter Listen möglich.

Ein auf der Verwendung verketteter Listen basierendes dynamisches Speicherzuweisungsverfahren ist beispielsweise aus der US 005784698 A bekannt. Dabei wird der Speicher eines Computersystems in eine Reihe sogenannter Buffer Pools eingeteilt, die jeweils eine Vielzahl an Buffern umfassen. Die Buffer in einem jeweiligen Buffer Pool weisen die gleiche Größe auf und unterscheiden sich hierin über die verschiedenen Buffer Pools hinweg. Sollen nun Informationen in den Speicher geschrieben werden, so werden nach und nach die einzelnen Buffer aufgefüllt, wobei so lange die jeweils größten freien Buffer mit Informationen aufgefüllt werden, bis ein Überschuss an Informationen anfällt. Es wird dann geprüft, welcher Buffer gerade noch groß genug ist, um diesen Überschuss aufzunehmen. Dies erlaubt es einen möglichst kleinen Buffer zum Aufnehmen des Überschusses bereitzustellen, was verhindert, dass zu viel ungenutzter Speicher in einem beschriebenen Buffer übrigbleibt. Dies sorgt für eine effiziente Speicherauslastung. Es handelt sich dabei jedoch um ein dynamisches Verfahren und ist entsprechend aufwändig. US 9552206 B2 offenbart ein Verfahren zum statischen Allozieren und Zuweisen von Informationen zu Speicherbereichen eines Prozessorexternen Speichers eines informationstechnischen Systems,

Ferner offenbart die DE 10 2019 217 844 A1 ein Verfahren zum Konfigurieren einer Speichereinheit einer Recheneinheit. Es handelt sich dabei um ein Verfahren zur dynamischen Speicherverwaltung, was das Neukonfigurieren der Speichereinheit während des regulären Betriebs der Recheneinheit ermöglicht. Hierzu wird die Einteilung der Speichereinheit in einzelne Speicherbereiche dynamisch während der Laufzeit verändert.

Mikrocontroller stellen besondere Anforderungen an die Speicherverwaltung, da die auf einem Mikrocontroller vorhandenen Rechenressourcen besonders knapp sind. Eine dynamische Speicherverwaltung ist daher auf einem Mikrocontroller in der Regel zu aufwändig, weshalb eine statische Speicherallokation durchgeführt wird. Hierzu ist der Speicher des Mikrocontrollers in einzelne Segmente unterteilt, mit einer festen Zuordnung, welche im Betrieb anfallenden Informationen beim Abarbeiten von Programmen bzw. Programmabschnitten, auch als Funktionen bezeichnet, in ein jeweiliges Speichersegment geschrieben werden sollen. Die entsprechenden Informationen werden dabei nach und nach auf die einzelnen Speichersegmente verteilt, wodurch der zur Verfügung stehende Speicherplatz des Speichers schnell aufgebraucht wird. Reicht der Speicherplatz nicht mehr aus, so sind besagte Informationen auf einen weiteren Speicher auszulagern. Dies erhöht die Laufzeit eines entsprechenden Programms, aufgrund der mit dem Speicherzugriff einhergehenden Latenzen.

### Zusammenfassung

Die Erfindung ist in den beigefügten Ansprüchen dargelegt. Die abhängigen Ansprüche geben besondere Ausführungsformen an.

Der vorliegenden Erfindung liegt die Aufgabe zugrunde ein verbessertes Verfahren zum statischen Allozieren und Zuweisen von Informationen zu Speicherebereichen eines prozessorexternen Speichers eines informationstechnischen Systems anzugeben, welches einen effizienteren Betrieb des informationstechnischen Systems erlaubt.

Erfindungsgemäß wird diese Aufgabe durch ein Verfahren zum statischen Allozieren und Zuweisen von Informationen zu Speicherbereichen eines prozessorexternen Speichers eines informationstechnischen Systems mit den Merkmalen des Anspruchs 1 gelöst. Vorteilhafte Ausgestaltungen und Weiterbildungen sowie ein entsprechendes informationstechnisches System und ein Fahrzeug mit einem solchen informationstechnischen System ergeben sich aus den hiervon abhängigen Ansprüchen.

Ein Verfahren zum statischen Allozieren und Zuweisen von Informationen zu Speicherbereichen eines prozessorexternen Speichers eines informationstechnischen Systems der eingangs genannten Art, wobei das informationstechnische System zum Lösen einer Aufgabe eine Vielzahl verketteter Funktionen während einer Ausführungsiteration durch einen Prozessor abarbeitet, wobei eine jeweilige Funktion nach ihrer Abarbeitung als Information ein Ausgabedatum bereitstellt, welche von einer in Informationsflussrichtung nachgelagerten Funktion einlesbar ist, und wobei ein jeweiliges Ausgabedatum zum Bereitstellen für das Einlesen jeweils in einen separaten Speicherbereich des Speichers, auf den die jeweilige Funktionen Zugriff haben, geschrieben wird, wird erfindungsgemäß dadurch weitergebildet, dass das informationstechnische System in einem einmaligen Analysevorgang:
- überprüft, welche Ausgabedaten der Funktionen während einer Ausführungsiteration gleichzeitig durch den Prozessor verarbeitet werden;
- eine Zuordnung der Ausgabedaten zu festen Speicherbereichen vornimmt, wobei jedes Ausgabedatum genau einem festen Speicherbereich zugeordnet wird, und wobei zumindest ein erstes und ein zweites Ausgabedatum, welche während der Ausführungsiteration vom Prozessor zu unterschiedlichen Zeitpunkten verarbeitet werden, demselben festen Speicherbereich zugeordnet werden; und
das informationstechnische System im Standardbetrieb während einer Ausführungsiteration:
- das erste Ausgabedatum in den ihm zugeordneten festen Speicherbereich schreibt und zumindest so lange im festen Speicherbereich belässt, bis die das erste Ausgabedatum erfordernde Funktion durch den Prozessor abgearbeitet wurde; und
- das zweite Ausgabedatum in denselben festen Speicherbereich zum Ersetzen des ersten Ausgabedatums schreibt, bevor die Funktion, die das zweite Ausgabedatum erfordert, durch den Prozessor abgearbeitet wird.

Das erfindungsgemäße Verfahren ermöglicht es trotz einer statischen Speicherallokation unterschiedliche Ausgabedaten denselben Speicherbereichen zuzuordnen. Hierdurch sinkt der Speicherbedarf des Speichers, wodurch entweder kleinere Speicher im informationstechnischen System verbaut werden können oder der freiwerdende Speicherplatz für andere Dinge genutzt werden kann.

Ermöglicht wird dies durch den einmaligen Analysevorgang, welcher getrennt zum Standardbetrieb des informationstechnischen Systems erfolgt. Das Verfahren eignet sich besonders für solche informationstechnischen Systeme, welche in einem eingeschränkten Kennfeld, also in einem schmalen Bereich fest vorgegebener Randbedingungen, operieren. Hierzu zählen Mikrocontroller, beispielsweise in Form von eingebetteten Systemen, da hier eine begrenzte Anzahl von "Standard-Programmabläufen" bearbeitet werden. Dies führt dazu, dass die Anzahl der in einer Aufgabe abzuarbeitenden Funktionen überschaubar bleibt. Entsprechend lässt sich der Aufwand zum Überprüfen, welche Ausgabedaten der Funktionen während einer Ausführungsiteration gleichzeitig durch den Prozessor verarbeitet werden sowie das Vornehmen der entsprechenden Zuordnung der Ausgabedaten zu festen Speicherbereichen in Grenzen halten.

Der einmalige Analysevorgang kann dann beispielsweise bei der Entwicklung des informationstechnischen/eingebetteten Systems erfolgen. So wird in der Entwicklung des eingebetteten Systems dessen Anforderungsspezifikation und damit die abzuarbeitenden Aufgaben und entsprechend die hierzu abzuarbeitenden Funktionen festgelegt. So ist fest definiert, welche Ausgabedaten wann anfallen, was die feste Speicherzuweisung der jeweiligen Ausgabedaten gemäß des erfindungsgemäßen Verfahrens erlaubt.

Dabei sind zwei Fälle zu unterscheiden. Der erste Fall sieht vor, dass Funktionen, die das erste Ausgabedatum erfordern, lediglich vor der (oder den) Funktion(en), die das zweite Ausgabedatum erfordern, in der Aufgabe vorhanden sind, während der zweite Fall vorsieht, dass auch nach einer solchen Funktion, die das zweite Ausgabedatum erfordert, zumindest eine Funktion, die das erste Ausgabedatum erfordert, in der Aufgabe vorhanden ist. Auf diese Fälle wird detailliert im Folgenden noch eingegangen.

So sieht eine vorteilhafte Weiterbildung des Verfahrens vor, dass ein drittes Ausgabedatum vor einem vierten Ausgabedatum bereitgestellt wird und das dritte Ausgabedatum und das vierte Ausgabedatum unterschiedlichen festen Speicherbereichen zugeordnet werden, wenn eine das dritte Ausgabedatum erfordernde Funktion nach einer das vierte Ausgabedatum erfordernden Funktion durch den Prozessor abgearbeitet wird. Das dritte Ausgabedatum und das vierte Ausgabedatum werden also von verschiedenen Funktionen erfordert, welche zu unterschiedlichen Zeitpunkten vom Prozessor abgearbeitet werden, dennoch kommen das dritte Ausgabedatum und das vierte Ausgabedatum nicht zum gemeinsamen Zuordnen desselben Speicherbereichs in Frage. Dies dient, um besagtem zweiten Fall gerecht zu werden.

Entsprechend einer weiteren vorteilhaften Ausgestaltung des Verfahrens wird der Speicher durch einen Hauptspeicher ausgebildet, verfügt das informationstechnische System über zumindest einen Nebenspeicher und es wird zum Ersetzen des ersten Ausgabedatums durch das zweite Ausgabedatum das erste Ausgabedatum aus dem Hauptspeicher verworfen oder das erste Ausgabedatum in den zumindest einen Nebenspeicher ausgelagert.

Generell können die von beliebigen Funktionen bereitgestellten bzw. eingelesenen Ausgabedaten jeweils ein erstes, zweites, drittes, viertes oder ein sonstiges Ausgabedatum ausbilden, je nachdem mit welchem anderen Ausgabedatum das betrachtete Ausgabedatum in Relation gesetzt wird. Die Bezeichnung "erstes", "zweites", "drittes" und "viertes" wird hier lediglich zur besseren Unterscheidung der Reihenfolge des Bearbeitens in Informationsflussrichtung verwendet.

Gemäß des ersten Falls kann das erste Ausgabedatum aus dem festen Speicherbereich gelöscht werden und durch das zweite Ausgabedatum ersetzt werden, da das erste Ausgabedatum später von keiner weiteren Funktion mehr benötigt wird.

Gemäß des zweiten Falls kann das dritte Ausgabedatum nicht einfach aus dem Speicher gelöscht werden, da das dritte Ausgabedatum nach einer Verarbeitung des vierten Ausgabedatums durch zumindest eine Funktion noch einmal erfordert wird. Um dieses Problem zu lösen kommen zwei Strategien in Frage.

Entweder werden das dritte und vierte Ausgabedatum in separate Speicherbereiche geschrieben, sodass das Problem, dass das dritte Ausgabedatum aus dem Speicherbereich entfernt werden muss, damit das vierte Ausgabedatum in diesen geschrieben werden kann, überhaupt nicht mehr existiert.

Alternativ ist es möglich das dritte Ausgabedatum in den Nebenspeicher auszulagern, solange eine Funktion das vierte Ausgabedatum erfordert. Ausgelagert meint in diesem Zusammenhang, dass das dritte Ausgabedatum zwar auch aus dem Hauptspeicher gelöscht wird, vor dem Verwerfen jedoch in den Nebenspeicher kopiert wird. Das dritte Ausgabedatum und das vierte Ausgabedatum lassen sich wie bereits im Vorigen ausgeführt als Analogie zum ersten und zweiten Ausgabedatum verstehen.

Eine weitere vorteilhafte Ausgestaltung des Verfahrens sieht ferner vor, dass der Nebenspeicher eine zum Hauptspeicher abweichende Zugriffszeit aufweist, insbesondere ein Tightly-Coupled-Memory (TCM) als Nebenspeicher verwendet wird. Mit anderen Worten kann der Nebenspeicher durch ein physisch anders ausgestaltetes Speicherelement ausgebildet sein als der Hauptspeicher. Dabei kann die Zugriffszeit, also die zum Lesen oder Schreiben von Informationen erforderliche Zeit, entweder größer oder auch kleiner sein. Besonders vorteilhaft ist es dabei, wenn es sich um ein TCM handelt, welcher somit eine besonders kurze Zugriffszeit aufweist. Bei einem TCM handelt es sich um ein solches Speicherelement, welches physikalisch besonders nahe am entsprechenden Prozessor angeordnet ist. Dies ermöglicht besonders kurze Zugriffszeiten. Beispielsweise kann es sich um ein SRAM Multi-Transistor-Speichermodul handeln. Der Verwaltungsaufwand, auch als "Overhead" bezeichnet, zur Speicherverwaltung eines TCMs ist dabei geringer als der Verwaltungsaufwand für den Cache des Prozessors. Neben den Ausgabedaten können zeitkritische Routinen im TCM vorgehalten, wie sogenannte Interrupt-Handling-Routines, Real-Time-Tasks sowie sogenannte Interrupt Stacks.

Entsprechend einer weiteren vorteilhaften Ausgestaltung des Verfahrens löst das informationstechnische System wenigstens zwei unterschiedliche Aufgaben zumindest zeitweise gleichzeitig. Mit Hilfe informationstechnischer Systeme ist auch die gleichzeitige Abarbeitung mehrerer Aufgaben möglich. Die jeweilig vorhandenen Rechenressourcen müssen dabei auf die einzelnen Aufgaben verteilt werden. Das erfindungsgemäße Verfahren kommt hier insbesondere zur Geltung, da somit auch auf informationstechnischen Systemen mit begrenzten Rechenressourcen, insbesondere Speicherelementen, eine effiziente Aufteilung von Informationen möglich ist. Im Analysevorgang prüft dann das informationstechnische System für sämtliche Aufgaben welche Ausgabedaten der jeweiligen Funktionen aller Aufgaben gleichzeitig durch den Prozessor verarbeitet werden. So kann auch eine effiziente Zuordnung der jeweiligen Ausgabedaten der Funktionen sämtlicher Aufgaben zu den festen Speicherbereichen des Speichers vorgenommen werden. Die wenigstens zwei unterschiedlichen Aufgaben können vollständig gleichzeitig durch den Prozessor bearbeitet werden, also gleichzeitig starten und enden, oder auch zueinander abweichende Start- bzw. Endzeitpunkte aufweisen.

Eine weitere vorteilhafte Ausgestaltung des Verfahrens sieht ferner vor, dass die Ausgabedaten der Funktionen einer ersten Aufgabe an den Hauptspeicher und die Ausgabedaten der Funktionen einer zweiten Aufgabe in einen der Nebenspeicher geschrieben werden. Generell können sämtliche Ausgabedaten weiterer, zur ersten Aufgabe abweichender Aufgaben, in ein und denselben Nebenspeicher geschrieben werden oder aber, sollte das informationstechnische System mehrere Nebenspeicher aufweisen, können auch die Ausgabedaten von separaten Aufgaben in separate Nebenspeicher geschrieben werden. Das Aufteilen der Ausgabedaten in Abhängigkeit der Aufgaben zu Speichern erlaubt eine noch effizientere Speicherverwaltung. Dies ist insbesondere vorteilhaft, wenn keine Informationen, sprich Ausgabedaten, zwischen den Aufgaben ausgetauscht werden müssen. Hierdurch werden die Rechenressourcen besonders effizient genutzt, sodass eine aufgrund von Latenzen entstehende Wartezeit zum Schreiben bzw. Lesen der Ausgabedaten für eine jeweilige Aufgabe auf ein Speicherelement nicht den Schreib- bzw. Lesezugriff für die andere Aufgabe blockiert. Hierdurch lässt sich die Ausführdauer bzw. Lösungsdauer der einzelnen Aufgaben verkürzen. Sind zwei Aufgaben auf einen Informationsaustausch angewiesen, so können die Ausgabedaten dieser Aufgaben in einen gemeinsamen Speicher geschrieben werden.

Entsprechend einer weiteren vorteilhaften Ausgestaltung des Verfahrens ermittelt das informationstechnische System den Speicherbedarf eines jeden Ausgabedatums und ordnet nur solche Ausgabedaten demselben festen Speicherbereich zu, welcher einen im Wesentlichen identischen Speicherbedarf aufweisen. Im Wesentlichen identisch meint in diesem Zusammenhang genau gleich, also beispielsweise zwei unterschiedliche Ausgabedaten sind beide jeweils 156 KB groß sowie, dass zwei unterschiedliche Ausgabedaten auch unterschiedlich groß sein können, jedoch nur mit einem vergleichsweise geringen Unterschied. So könnte das erste Ausgabedatum 128 KB groß sein und das zweite Ausgabedatum 156 KB. Die Differenz der Dateigröße, bis zu der zwei unterschiedliche Ausgabedaten als "im Wesentlichen" identisch groß erachtet werden, kann fest vorgegeben sein oder auch von der Dateigröße des jeweiligen Ausgabedatums abhängen. Beispielsweise kann die zulässige Größendifferenz einem anteiligen Prozentwert wie 10% oder 20% der Dateigröße des Ausgabedatums entsprechen. Ist ein Ausgabedatum beispielsweise 128 KB groß, so könnte die zulässige Abweichung 13 oder 26 KB betragen.

Die Zuweisung solcher im Wesentlichen identisch gleichgroßen Ausgabedaten zu festen Speicherbereichen erlaubt eine noch effizientere Speicherplatznutzung des Speichers. Würden nämlich unterschiedlich große Ausgabedaten demselben festen Speicherbereich zugeordnet, so würde zur Verfügung stehender Speicherlatz auf dem Speicher verschwendet werden, wenn nach einem besonders großen Ausgabedatum lediglich ein vergleichsweise kleines Ausgabedatum gespeichert wird. Dies lässt sich so verhindern.

Eine weitere vorteilhafte Ausgestaltung des Verfahrens sieht ferner vor, dass das informationstechnische System im Analysevorgang einen genetischen Algorithmus anwendet, um zu ermitteln, welche Ausgabedaten jeweils demselben festen Speicherbereich zuzuordnen sind. Die Frage, welche Ausgabedaten welchen festen Speicherbereich zuzuordnen sind, stellt ein Pareto-optimales Optimierungsproblem dar. Generell könnten auch andere Optimierungsalgorithmen wie eine sogenannte Greedy- oder dynamische Optimierung eingesetzt werden, welche jedoch keine polynominelle Laufzeit mehr aufweisen. Ein genetischer Algorithmus führt jedoch zuverlässig in jeglichen Situationen zu einer konvergierten Lösung. Hierdurch wird die Zuverlässigkeit zum Auffinden einer optimalen Zuordnung erhöht.

Entsprechend einer weiteren vorteilhaften Ausgestaltung des Verfahrens wird als erstes Optimierungsziel dabei verfolgt, die Gesamtlaufzeit der zu lösenden Aufgaben zu minimieren und als zweites Optimierungsziel verfolgt, den durch die feste Speicherbereiche in Anspruch genommenen Anteil am Speicher zu minimieren. Für einen Nutzer des informationstechnischen Systems ist es von besonderem Interesse, wenn die zu erledigenden Aufgaben besonders schnell gelöst, also abgearbeitet werden. Dies stellt somit das Hauptziel in der Optimierung dar. Daneben gilt es den belegten Anteil am Speicher zu reduzieren, sodass dieser für weitere Zwecke genutzt werden kann. Dies stellt entsprechend eine Nebenbedingung dar.

Die Laufzeit der Aufgaben sowie der Anteil des belegten Speichers sind dabei voneinander abhängig. Bei einer bisherigen statischen Speicherallokation wird jedes Ausgabedatum einem individuellen festen Speicherbereich zugeordnet. Entsprechend ist der Speicher vergleichsweise stark belegt und es müssen gegebenenfalls Ausgabedaten ausgelagert werden. Je mehr Ausgabedaten in einen auf einem Nebenspeicher vorhandenen Stack verschoben werden, desto größer ist auch die Laufzeit der jeweiligen Aufgabe, da die jeweiligen Ausgabedaten zwischen dem Hauptspeicher und Nebenspeicher "geswappt" werden müssen. Diese Zugriffszeiten führen zu einer Erhöhung der Latenz und damit zu einer vergrößerten Ausführdauer der Aufgabe. Es ist damit erstrebenswert möglichst viele Ausgabedaten jeweils ein und demselben Speicherbereich zuzuweisen.

Das erfindungsgemäße Verfahren ermöglicht genau das, und führt damit dazu, dass mehr Speicherplatz auf dem Speicher zur Verfügung steht, was es je nach Komplexität der abzuarbeitenden Aufgabe erlaubt, keine Ausgabedaten mehr auf den Nebenspeicher auszulagern.

Wie bereits erwähnt können jedoch auch Fälle eintreten, in denen ein Ausgabedatum zu einem späteren Zeitpunkt erneut erfordert wird, wodurch das entsprechende Ausgabedatum nicht einfach aus dem Hauptspeicher gelöscht werden kann. So gilt es die Ausgabedaten so den festen Speicherbereichen zuzuordnen, dass auch bei einer mehrfachen Zuordnung von Ausgabedaten zu ein und demselben festen Speicherbereich die erforderliche Anzahl an Auslagerungsvorgängen auf ein Mindestmaß reduziert wird. Unter Berücksichtigung des ersten und zweiten Optimierungsziels findet hier insbesondere ein genetischer Algorithmus besonders zuverlässig eine vergleichsweise optimale Lösung.

Ein zur Durchführung eines im vorigen beschriebenen Verfahrens eingerichtetes informationstechnisches System ist erfindungsgemäß dabei als Mikrocontroller ausgeführt. Die besondere Eignung des erfindungsgemäßen Verfahrens für den Einsatz in einer als Mikrocontroller ausgestalten Umgebung wurde bereits im vorigen erläutert.

Erfindungsgemäß umfasst ein Fahrzeug ein im vorigen beschriebenes informationstechnisches System. Besonders vorteilhaft ist das informationstechnische System dabei als Mikrocontroller ausgeführt. Das erfindungsgemäße Verfahren lässt sich somit in die einzelnen Steuergeräte bzw. Recheneinheiten eines Fahrzeugs integrieren und verbessert somit die Effizienz der jeweiligen Hardwarekomponenten. So ist eine besonders effiziente Speichernutzung möglich, zudem lässt sich die Laufzeit der von den einzelnen Steuergeräten bearbeiteten Aufgaben reduzieren.

Bei dem Fahrzeug kann es sich um ein beliebiges Fahrzeug wie einen Pkw, Lkw, Transporter, Bus oder dergleichen handeln. Neben Straßenfahrzeugen eignen sich auch Schienenfahrzeuge, Wasserfahrzeuge oder bspw. Luftfahrzeuge zur Integration besagter informationstechnischer Systeme.

Weitere vorteilhafte Ausgestaltungen des erfindungsgemäßen Verfahrens zur statischen Allokation von Informationen zu Speicherbereichen eines prozessorexternen Speichers ergeben sich auch aus den Ausführungsbeispielen, welche nachfolgend unter Bezugnahme auf die Figuren näher beschrieben werden.

Dabei zeigen:
- Fig. 1: eine schematisierte Darstellung eines Komponenten-Datenflussgraphen der zur Lösung einer Aufgabe durch ein informationstechnisches System verwendeten Funktionen;
- Fig. 2: eine schematisierte Darstellung einer klassischen Speicherallokation;
- Fig. 3: eine schematisierte Darstellung einer erfindungsgemäßen Speicherallokation; und
- Fig. 4: eine schematisierte Darstellung eines Komponenten-Datenflussgraphen von zwei sich durch ihre Laufzeit unterscheidenden Aufgaben.

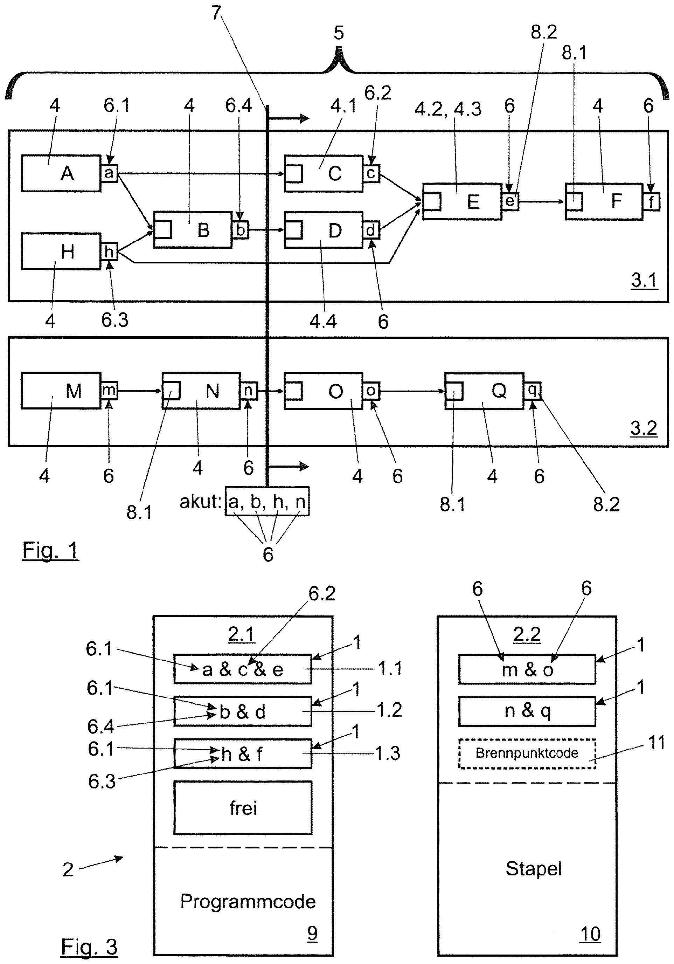

Informationstechnische Systeme wie PCs oder eingebettete Systeme werden im Alltag zum Lösen verschiedenster Problemstellungen eingesetzt. Hierzu werden Informationen von einem Prozessor des informationstechnischen Systems verarbeitet. Figur 1 zeigt dabei einen Komponenten-Datenflussgraph der dabei durch den Prozessor verarbeiteten Informationen. Zur Wahrung der Übersichtlichkeit sind in den Figuren teilweise nicht alle relevanten Stellen mit Bezugszeichen versehen.

Zu erkennen sind eine erste und eine zweite Aufgabe 3.1 und 3.2. Die jeweiligen Aufgaben 3.1 und 3.2 können von einzelnen Programmen oder Teilprogrammen ausgebildet sein. Eine Aufgabe 3.1, 3.2 wird dabei während einer Ausführungsiteration 5 abgearbeitet. Der aktuelle Zeitpunkt in der Ausführungsiteration 5 wird hier als Ausführungsposition 7 bezeichnet. Zur Lösung einer jeweiligen Aufgabe 3.1, 3.2 werden einzelne, voneinander abhängige bzw. aufeinander aufbauende Funktionen 4 durch den Prozessor abgearbeitet. Eine solche Funktion 4 wird ebenfalls von einzelnen Programmcodebausteinen ausgebildet. Eine Funktion 4 kann eine Eingangsschnittstelle 8.1 zum Empfangen von Ausgabedaten 6 aufweisen sowie eine Ausgangsschnittstelle 8.2 zum Ausgeben von Ausgabedaten 6.

Zu einem jeweiligen Zeitpunkt während der Ausführungsiteration 5 sind unterschiedliche Ausgabedaten 6 aktiv, auch als "live" bezeichnet. Dies bedeutet diese Ausgabedaten 6 müssen durch den Prozessor verarbeitet werden und stehen dem Prozessor entsprechend zur Verfügung. An der Stelle der Ausführungsposition 7 sind in dem gezeigten Ausführungsbeispiel die Ausgabedaten 6: "a", "b", "h" und "n" live.

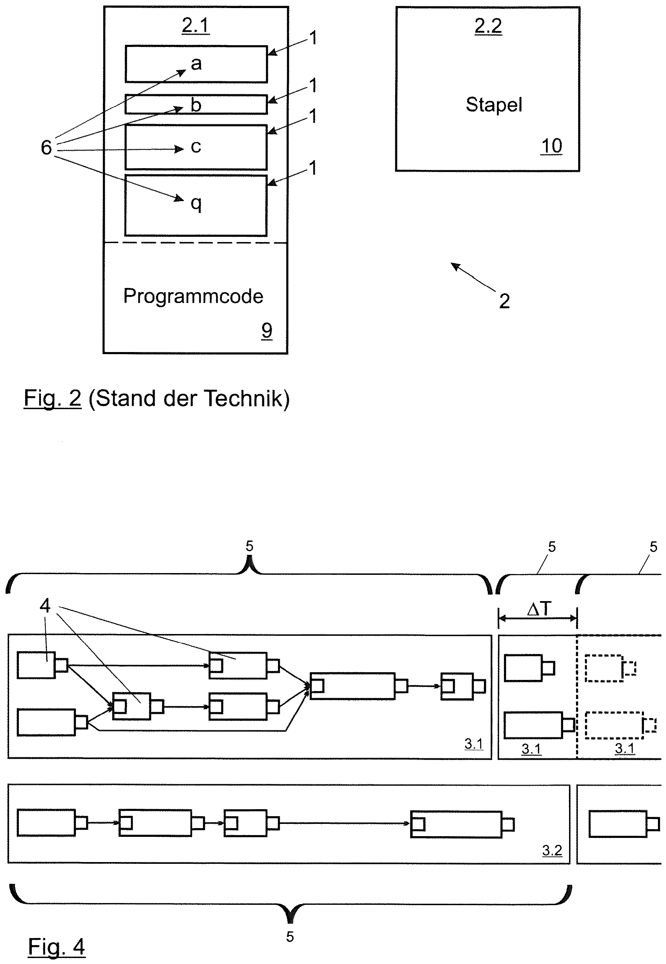

Um die Aufgaben 3.1, 3.2 lösen zu können, muss der Prozessor auf die jeweiligen Ausgabedaten 6 zugreifen können. Hierzu werden die Ausgabedaten 6 nach ihrer Erzeugung in einen Speicher 2 geschrieben. Der Speicher 2 ist näher in den Figuren 2 und 3 dargestellt. Dabei zeigt Figur 2 eine Speicherallokation gemäß bekannter Verfahren.

In den in den Figuren gezeigten Ausführungsvarianten weist das informationstechnische System einen Hauptspeicher 2.1 und einen Nebenspeicher 2.2 auf. Bei dem Nebenspeicher 2.2 handelt es sich bevorzugt um einen sogenannten Tightly-Coupled-Memory (TCM). Üblicherweise werden die Ausgabedaten 6 nach ihrer Erzeugung durch die Funktionen 4 sukzessive in die einzelnen Speicherbereiche 1 des Speichers 2 geschrieben. Ein Teil des Speichers ist dabei für Code 9 reserviert. Hierbei handelt es sich beispielsweise um den zur Ausbildung der Funktionen 4 genutzten Code 9.

Die jeweiligen Ausgabedaten 6 können sich in ihrem Speicherbedarf unterscheiden, was in Figur 2 durch unterschiedlich große Boxen angedeutet ist.

Ferner dient der Nebenspeicher 2.2 zum Bevorraten eines sogenannten Stacks 10, der zur Auslagerung von Informationen, unter anderem besagter Ausgabedaten 6, dient. Wie Figur 2 entnommen werden kann, ist gemäß einer aus dem Stand der Technik bekannten Vorgehensweise zur statischen Speicherallokation der Hauptspeicher 2.1 bereits vollständig gefüllt. Die im weiteren Ablauf der Ausführungsiteration 5 generierten Ausgabedaten 6 können ohne weiteres nicht in den Hauptspeicher 2.1 geschrieben werden. Es müssen dann nicht mehr benötigte Ausgabedaten 6 aus dem Hauptspeicher 2.1 in den Nebenspeicher 2.2 ausgelagert werden. Dies ist jedoch aufgrund des Lesezugriffs auf den Hauptspeicher 2.1 und Schreibzugriffs auf den Nebenspeicher 2.2 zeitaufwändig und erhöht damit die Ausführungszeit bzw. Laufzeit einer jeweiligen Aufgabe 3.1, 3.2 während der Ausführungsformsiteration 5.

Zur Reduktion des Speicherbedarfs und zur Verbesserung der Laufzeit wird ein erfindungsgemäßes Verfahren zur statischen Speicherallokation angewendet. Diese sieht vor, dass in einem einmaligen Analysevorgang das informationstechnische System überprüft, welche Ausgabedaten 6 der Funktionen 4 während einer Ausführungsiteration 5 gleichzeitig durch den Prozessor verarbeitet werden. Es wird dann eine solche Zuordnung der Ausgabedaten 6 zu festen Speicherbereichen 1 vorgenommen, bei dem jedes Ausgabedatum 6 genau einem festen Speicherbereich 1 zugeordnet wird und wobei zumindest ein erstes Ausgabedatum 6.1 und ein zweites 6.2 Ausgabedatum, welche während der Ausführungsiteration 5 vom Prozessor zu unterschiedlichen Zeitpunkten verarbeitet werden, demselben festen Speicherbereich 1 zugeordnet werden. Im Standardbetrieb während einer Ausführungsiteration 5 schreibt das informationstechnische System dann das erste Ausgabedatum 6.1 in den ihm zugeordneten festen Speicherbereich 1.1 und belässt dies so lange darin, bis die das erste Ausgabedatum 6.1 erfordernde Funktion 4.1 durch den Prozessor abgearbeitet wurde. Das informationstechnische System schreibt dann das zweite Ausgabedatum 6.2 in denselben festen Speicherbereich 1.1 zum Ersetzen des ersten Ausgabedatums 6.1, bevor die Funktion 4.2, die das zweite Ausgabedatum 6.2 erfordert, durch den Prozessor abgearbeitet wird. Generell kann jedes der Ausgabedaten 6 das erste, zweite oder auch ein drittes oder viertes Ausgabedatum 6.1, 6.2, 6.3 und 6.4 ausbilden. Beispielhaft sind die entsprechenden Bezugszeichen für die Ausgabedaten 6 "a" und "c" gewählt. Die entsprechende Aufteilung auf den Speicher 2 ist in Figur 3 gezeigt.

Wie Figur 1 entnommen werden kann, wird das Ausgabedatum 6 "a" nach einer Verarbeitung durch die mit dem Buchstaben C markierte Funktion 4 nicht mehr benötigt und ist entsprechend danach nicht mehr live. Dementsprechend kann das Ausgabedatum 6 "a" durch das Ausgabedatum 6 "c" ersetzt werden.

In einer besonders einfachen Ausführung des erfindungsgemäßen Verfahrens werden Ausgabedaten 6, welche während einer Ausführungsiteration 5 nicht mehr live sind, aus dem Hauptspeicher 2.1 gänzlich gelöscht. Somit ist keine Auslagerung in den Nebenspeicher 2.2 erforderlich. Jedoch steigt der Speicherplatzbedarf auf dem Hauptspeicher 2.1, da gegebenenfalls die Anzahl auf ein und demselben festen Speicherbereich 1 vorsehbaren Ausgabedaten 6 reduziert wird.

Es kann nämlich der Fall auftreten, welcher im Vorigen als "zweiter Fall" bezeichnet wurde, dass ein drittes Ausgabedatum 6.3 (hier beispielshaft das Ausgabedatum 6 "h") vor einem vierten Ausgabedatum 6.4 (hier das Ausgabedatum 6 "b") bereitgestellt wird und das dritte Ausgabedatum 6.3 und das vierte Ausgabedatum 6.4 unterschiedlichen festen Speicherbereichen 1.2 und 1.3 zugeordnet werden, wenn eine das dritte Ausgabedatum 6.3 erfordernde Funktion 4.3 nach einer das vierte Ausgabedatum 6.4 erfordernden Funktion 4.4 durch den Prozessor abgearbeitet wird.

Generell wäre es jedoch möglich die Ausgabedaten 6 "h" und "b" demselben festen Speicherbereich 1 zuzuordnen, da diese beiden Ausgabedaten 6 nicht gleichzeitig durch den Prozessor verarbeitet werden. Jedoch wird das Ausgabedatum 6 "h" später noch einmal benötigt, sodass es erneut in den Hauptspeicher 2.1 geladen werden muss, damit der Prozessor bzw. die Funktion 4.3 darauf zugreifen kann. Alternativ wäre es hierzu möglich das Ausgabedatum 6 "h" temporär in den Nebenspeicher 2.2 auszulagern. Hierdurch lässt sich noch mehr Speicherplatz im Hauptspeicher 2.1 einsparen, jedoch erhöht sich die Laufzeit der jeweiligen Aufgabe 3.1, aufgrund des Datenzugriffs. So muss das Ausgabedatum 6 "h" zuerst aus dem Hauptspeicher 2.1 ausgelesen und dann in den Nebenspeicher 2.2 geschrieben werden und danach aus dem Nebenspeicher 2.2 ausgelesen und erneut in den Hauptspeicher 2.1 geschrieben werden.

Ist der Nebenspeicher 2.2 jedoch ausreichend schnell, sodass seine Zugriffszeit in der Größenordnung der Taktfrequenz des Prozessors liegt, beispielsweise bei einer Ausführung als TCM, so kann es gegebenenfalls möglich sein, dass die einzelnen Ausgabedaten 6 aus dem Nebenspeicher 2.2 auch direkt in den Prozessor eingelesen werden und nicht erst in den Hauptspeicher 2.1 geschrieben werden. Hierdurch lässt sich die Laufzeit der Ausführungsiteration 5 noch weiter reduzieren.

Zudem kann bei einer Ausführung des Nebenspeichers 2.2 als TCM auch sogenannter Hotspotcode 11 im Nebenspeicher 2.2 vorgesehen werden. Bei dem sogenannten Hotspotcode 11 handelt es sich um Codeelemente, welche besonders häufig vom Prozessor abgearbeitet werden, beispielsweise der Rumpf bzw. Kern von Schleifen. Hierdurch lässt sich die Ausführungszeit noch weiter reduzieren.

Wie Figur 4 zeigt, kann jede Funktion 4 eine individuelle Bearbeitungszeit, angedeutet durch unterschiedlich lange Boxen, aufweisen. Dies resultiert zum einen aus der benötigten Zugriffszeit zum Lesen bzw. Schreiben der entsprechenden Ausgabedaten 6 sowie die eigentliche Prozessorzeit zum Bearbeiten der jeweiligen Funktion 4. Dies kann entsprechend dazu führen, dass die einzelnen Aufgaben 3.1 und 3.2 eine unterschiedliche Ausführungsdauer aufweisen. Wie Figur 4 entnommen werden kann, können sich dabei die einzelnen Ausführungsiterationen 5 für die jeweiligen Aufgaben 3.1 und 3.2 jeweils nahtlos (durchgezogene Linie) aneinander anschließen. Dieser Sachverhalt wird vom informationstechnischen System im Analysevorgang berücksichtigt, um zu ermitteln, welche Ausgabedaten 6 von den einzelnen Funktionen 4 gleichzeitig durch den Prozessor verarbeitet werden.

Das informationstechnische System kann jedoch auch eine Pause vorsehen, um die Ausführungsiterationen 5 der ersten Aufgabe 3.1 so aufeinander abzustimmen, dass die erste Aufgabe 3.1 erst erneut durchgeführt wird, wenn auch die zweite Aufgabe 3.2 erneut startet. Dies ist in Figur 4 durch eine gestrichelte Linie und den Zeitversatz ΔT symbolisiert. Dies hat den Vorteil, dass es zu keinem Versatz der Abarbeitungszeit der jeweiligen Funktionen 4 kommt, sodass die mögliche Anzahl an Kombinationen der zeitgleich abzuarbeitenden Funktionen 4 bzw. Ausgabedaten 6 sinkt. Dies hat jedoch den Nachteil, dass die Frequenz, mit der die erste Aufgabe 3.1 abgearbeitet wird, sinkt. Hier gilt es je nach Anwendungsfall abzuwägen, welche Variante durch das informationstechnische System durchgeführt werden soll.

## Patentansprüche

1. Verfahren zum statischen Allozieren und Zuweisen von Informationen zu Speicherbereichen (1) eines prozessorexternen Speichers (2) eines informationstechnischen Systems, wobei das informationstechnische System zum Lösen einer Aufgabe (3.1, 3.2) eine Vielzahl verketteter Funktionen (4) während einer Ausführungsiteration (5) durch einen Prozessor abarbeitet, wobei eine jeweilige Funktion (4) nach ihrer Abarbeitung als Information ein Ausgabedatum (6) bereitstellt, welche von einer in Informationsflussrichtung nachgelagerten Funktion (4) einlesbar ist, und wobei ein jeweiliges Ausgabedatum (6) zum Bereitstellen für das Einlesen jeweils in einen separaten Speicherbereich (1) des Speichers (2), auf den die jeweiligen Funktionen (4) Zugriff haben, geschrieben wird,
**dadurch gekennzeichnet, dass**
das informationstechnische System in einem einmaligen Analysevorgang:
- überprüft, welche Ausgabedaten (6) der Funktionen (4) während einer Ausführungsiteration (5) gleichzeitig durch den Prozessor verarbeitet werden;
- eine Zuordnung der Ausgabedaten (6) zu festen Speicherbereichen (1) vornimmt, wobei jedes Ausgabedatum (6) genau einem festen Speicherbereich (1) zugeordnet wird, und wobei zumindest ein erstes (6.1) und ein zweites Ausgabedatum (6.2), welche während der Ausführungsiteration (5) vom Prozessor zu unterschiedlichen Zeitpunkten verarbeitet werden, demselben festen Speicherbereich (1) zugeordnet werden; und
das informationstechnische System im Standardbetrieb während einer Ausführungsiteration (5):
- das erste Ausgabedatum (6.1) in den ihm zugeordneten festen Speicherbereich (1.1) schreibt und zumindest solange im festen Speicherbereich (1.1) belässt, bis die das erste Ausgabedatum (6.1) erfordernde Funktion (4.1) durch den Prozessor abgearbeitet wurde; und
- das zweite Ausgabedatum (6.2) in denselben festen Speicherbereich (1.1) zum Ersetzen des ersten Ausgabedatums (6.1) schreibt, bevor die Funktion (4.2) die das zweite Ausgabedatum (6.2) erfordert durch den Prozessor abgearbeitet wird.

2. Verfahren nach Anspruch 1,
**dadurch gekennzeichnet, dass**
ein drittes Ausgabedatum (6.3) vor einem vierten Ausgabedatum (6.4) bereitgestellt wird und das dritte Ausgabedatum (6.3) und das vierte Ausgabedatum (6.4) unterschiedlichen festen Speicherbereichen (1.2, 1.3) zugeordnet werden, wenn eine das dritte Ausgabedatum (6.3) erfordernde Funktion (4.3) nach einer das vierte Ausgabedatum (6.4) erfordernden Funktion (4.4) durch den Prozessor abgearbeitet wird.

3. Verfahren nach Anspruch 1 oder 2,
**dadurch gekennzeichnet, dass**
der Speicher (2) durch einen Hauptspeicher (2.1) ausgebildet wird, das informationstechnische System über zumindest einen Nebenspeicher (2.2) verfügt und zum Ersetzen des ersten Ausgabedatums (6.1) durch das zweite Ausgabedatum (6.2) das erste Ausgabedatum (6.1) aus dem Hauptspeicher (2.1) verworfen wird oder das erste Ausgabedatum (6.1) in den zumindest einen Nebenspeicher (2.2) ausgelagert wird.

4. Verfahren nach Anspruch 3,
**dadurch gekennzeichnet, dass**
der Nebenspeicher (2.2) eine zum Hauptspeicher (2.1) abweichende Zugriffszeit aufweist, insbesondere ein Tightly-Coupled-Memory als Nebenspeicher (2.2) verwendet wird.

5. Verfahren nach einem der Ansprüche 1 bis 4,
**dadurch gekennzeichnet, dass**
das informationstechnische System wenigstens zwei unterschiedliche Aufgaben (3.1, 3.2) zumindest zeitweise gleichzeitig löst.

6. Verfahren nach Anspruch 5,
**dadurch gekennzeichnet, dass**
die Ausgabedaten (6) der Funktionen (4) einer ersten Aufgabe (3.1) in den Hauptspeicher (2.1) und die Ausgabedaten (6) der Funktionen (4) einer zweiten Aufgabe (3.2) in einen der Nebenspeicher (2.2) geschrieben werden.

7. Verfahren nach einem der Ansprüche 1 bis 6,
**dadurch gekennzeichnet, dass**
das informationstechnische System den Speicherbedarf eines jeden Ausgabedatums (6) ermittelt und nur solche Ausgabedaten (6) demselben festen Speicherbereich (1) zuordnet, welche einen im Wesentlichen identischen Speicherbedarf aufweisen.

8. Verfahren nach einem der Ansprüche 1 bis 7,
**dadurch gekennzeichnet, dass**
das informationstechnische System im Analysevorgang einen genetischen Algorithmus anwendet, um zu ermitteln welche Ausgabedaten (6) jeweils einem selben festen Speicherbereich (1) zuzuordnen sind.

9. Verfahren nach Anspruch 8,
**dadurch gekennzeichnet, dass**
als erstes Optimierungsziel verfolgt wird, die Gesamtlaufzeit der zu lösenden Aufgaben (3.1, 3.2) zu minimieren und als zweites Optimierungsziel verfolgt wird, den durch die festen Speicherbereiche (1) in Anspruch genommenen Anteil am Speicher (2) zu minimieren.

10. Informationstechnisches System zur Durchführung eines Verfahrens nach einem der Ansprüche 1 bis 9,
**gekennzeichnet durch**
eine Ausführung als Mikrocontroller.

11. Fahrzeug,
**gekennzeichnet durch**
ein zur Durchführung eines Verfahrens nach einem der Ansprüche 1 bis 9 eingerichtetes informationstechnisches System, insbesondere ein informationstechnisches System nach Anspruch 10.

## Claims

1. Method for statically allocating and assigning information to memory areas (1) of a processor-external memory (2) of an information technology system, the information technology system processing a plurality of linked functions (4) during an execution iteration (5) by means of a processor to solve a task (3.1, 3.2), a relevant function (4), after processing thereof, providing an output datum (6) as information, which can be read by means of a function (4) downstream in the direction of information flow, and a relevant output datum (6) being written to a separate memory area (1) of the memory (2) to which the respective functions (4) have access, in order to be prepared for reading, **characterized in that**
the information technology system, in a single analysis process:
- checks which output data (6) of the functions (4) are simultaneously processed by means of the processor during an execution iteration (5);
- assigns the output data (6) to fixed memory areas (1), each output datum (6) being assigned to exactly one fixed memory area (1), and at least a first (6.1) and a second output datum (6.2), which are processed by means of the processor at different times during the execution iteration (5), being assigned to the same fixed memory area (1); and
the information technology system, in standard operation during an execution iteration (5):
- writes the first output datum (6.1) into the fixed memory area (1.1) assigned to it and leaves it in the fixed memory area (1.1) at least until the function (4.1) requiring the first output datum (6.1) has been processed by means of the processor; and
- writes the second output datum (6.2) into the same fixed memory area (1.1) to replace the first output datum (6.1) before the function (4.2) requiring the second output datum (6.2) is processed by means of the processor.

2. Method according to claim 1,
**characterized in that**
a third output datum (6.3) is provided before a fourth output datum (6.4) and the third output datum (6.3) and the fourth output datum (6.4) are assigned to different fixed memory areas (1.2, 1.3) when a function (4.3) requiring the third output datum (6.3) is processed by means of the processor after a function (4.4) requiring the fourth output datum (6.4).

3. Method according to either claim 1 or claim 2,
**characterized in that**
the memory (2) is formed by a main memory (2.1), the information technology system has at least one secondary memory (2.2), and in order to replace the first output datum (6.1) with the second output datum (6.2), the first output datum (6.1) is discarded from the main memory (2.1) or the first output datum (6.1) is swapped out to the at least one secondary memory (2.2).

4. Method according to claim 3,
**characterized in that**
the secondary memory (2.2) has an access time that differs from that of the main memory (2.1), in particular a tightly coupled memory is used as the secondary memory (2.2).

5. Method according to any of claims 1 to 4,
**characterized in that**
the information technology system solves at least two different tasks (3.1, 3.2) at least temporarily simultaneously.

6. Method according to claim 5,
**characterized in that**
the output data (6) of the functions (4) of a first task (3.1) are written into the main memory (2.1) and the output data (6) of the functions (4) of a second task (3.2) are written into one of the secondary memories (2.2).

7. Method according to any of claims 1 to 6,
**characterized in that**
the information technology system determines the storage requirement of each output datum (6) and assigns to the same fixed storage area (1) only the output data (6) which have an substantially identical storage requirement.

8. Method according to any of claims 1 to 7,
**characterized in that**
the information technology system uses a genetic algorithm in the analysis process to determine which output data (6) are to be assigned to the same fixed memory area (1) in each case.

9. Method according to claim 8,
**characterized in that**
the first optimization objective is to minimize the total runtime of the tasks (3.1, 3.2) to be solved and the second optimization objective is to minimize the portion of the memory (2) used by the fixed memory areas (1).

10. Information technology system for carrying out a method according to any of claims 1 to 9,
**characterized by**
execution as a microcontroller.

11. Vehicle,
**characterized by**
an information technology system for carrying out a method according to any of claims 1 to 9, in particular an information technology system according to claim 10.

## Revendications

1. Procédé pour l'allocation statique et l'affectation d'informations à des zones de mémoire (1) d'une mémoire (2) externe au processeur d'un système de la technique de l'information, dans lequel le système de la technique de l'information traite, pour la résolution d'une tâche (3.1, 3.2), une pluralité de fonctions (4) enchaînées pendant une itération d'exécution (5) par un processeur, dans lequel une fonction (4) respective met à disposition, après le traitement de ladite fonction en tant qu'information, une donnée de sortie (6) qui peut être lue par une fonction (4) placée en aval dans un sens de flux d'information, et dans lequel une donnée de sortie (6) respective est respectivement écrite, pour la mise à disposition pour la lecture, dans une zone de mémoire (1) séparée de la mémoire (2) à laquelle les fonctions (4) respectives ont accès,
**caractérisé en ce que**
en un seul processus d'analyse, le système de la technique de l'information :
- vérifie quelles données de sortie (6) des fonctions (4) sont traitées simultanément par le processeur pendant une itération d'exécution (5) ;
- effectue une attribution des données de sortie (6) à des zones de mémoire (1) fixes, dans lequel chaque donnée de sortie (6) est attribuée à exactement une zone de mémoire (1) fixe, et dans lequel au moins une première (6.1) et une deuxième donnée de sortie (6.2), lesquelles sont traitées par le processeur à des moments différents pendant l'itération d'exécution (5), sont attribuées à la même zone de mémoire (1) fixe ; et
en fonctionnement standard pendant une itération d'exécution (5), le système de la technique de l'information :
- écrit la première donnée de sortie (6.1) dans la zone de mémoire (1.1) fixe qui lui est attribuée et la laisse dans la zone de mémoire (1.1) fixe au moins jusqu'à ce que la fonction (4.1) nécessitant la première donnée de sortie (6.1) ait été traitée par le processeur ; et
- écrit la deuxième donnée de sortie (6.2) dans la même zone de mémoire (1.1) fixe pour le remplacement de la première donnée de sortie (6.1) avant que la fonction (4.2) nécessitant la deuxième donnée de sortie (6.2) ne soit traitée par le processeur.

2. Procédé selon la revendication 1,
**caractérisé en ce que**
une troisième donnée de sortie (6.3) est mise à disposition avant une quatrième donnée de sortie (6.4) et la troisième donnée de sortie (6.3) et la quatrième donnée de sortie (6.4) sont attribuées à différentes zones de mémoire (1.2, 1.3) fixes lorsqu'une fonction (4.3) nécessitant la troisième donnée de sortie (6.3) est traitée par le processeur après une fonction (4.4) nécessitant la quatrième donnée de sortie (6.4).

3. Procédé selon la revendication 1 ou 2,
**caractérisé en ce que**
la mémoire (2) est formée par une mémoire principale (2.1), le système de la technique de l'information possède au moins une mémoire auxiliaire (2.2) et, pour le remplacement de la première donnée de sortie (6.1) par la deuxième donnée de sortie (6.2), la première donnée de sortie (6.1) est détruite de la mémoire principale (2.1) ou la première donnée de sortie (6.1) est délocalisée dans l'au moins une mémoire auxiliaire (2.2).

4. Procédé selon la revendication 3,
**caractérisé en ce que**
la mémoire auxiliaire (2.2) présente un temps d'accès différent de celui de la mémoire principale (2.1), en particulier une mémoire étroitement couplée est utilisée en tant que mémoire auxiliaire (2.2).

5. Procédé selon l'une des revendications 1 à 4,
**caractérisé en ce que**
le système de la technique de l'information résout au moins deux tâches (3.1, 3.2) différentes au moins temporairement de manière simultanée.

6. Procédé selon la revendication 5,
**caractérisé en ce que**
les données de sortie (6) des fonctions (4) d'une première tâche (3.1) sont écrites dans la mémoire principale (2.1) et les données de sortie (6) des fonctions (4) d'une seconde tâche (3.2) sont écrites dans l'une des mémoires auxiliaires (2.2).

7. Procédé selon l'une des revendications 1 à 6,
**caractérisé en ce que**
le système de la technique de l'information détermine le besoin en mémoire d'une donnée de sortie (6) respective et n'attribue à la même zone de mémoire (1) fixe que les données de sortie (6) qui présentent un besoin en mémoire sensiblement identique.

8. Procédé selon l'une des revendications 1 à 7,
**caractérisé en ce que**
le système de la technique de l'information a recours à un algorithme génétique dans le processus d'analyse afin de déterminer quelles données de sortie (6) doivent être respectivement attribuées à une même zone de mémoire (1) fixe.

9. Procédé selon la revendication 8,
**caractérisé en ce que**
la minimisation de la durée de fonctionnement totale des tâches (3.1, 3.2) à résoudre est poursuivie en tant que premier objectif d'optimisation et la minimisation de la part de la mémoire (2), laquelle part est occupée par les zones de mémoire (1) fixes dans la revendication, est poursuivie en tant que second objectif d'optimisation.

10. Système de la technique de l'information pour la réalisation d'un procédé selon l'une des revendications 1 à 9,
**caractérisé par**
une exécution en tant que microcontrôleur.

11. Véhicule,
**caractérisé par**
un système de la technique de l'information configuré pour réaliser un procédé selon l'une des revendications 1 à 9, en particulier un système de la technique de l'information selon la revendication 10.
